# EUROPEAN PATENT SPECIFICATION

(11) **EP 2 564 104 B1**
(45) Date of publication and mention of the grant of the patent: **02.11.2016**
(21) Application number: 11723784.2
(22) Date of filing: 02.05.2011
(51) Int. Cl.: F16L 19/06, F16L 19/08

(54) **HIGH-PRESSURE TUBE FITTINGS AND END-FACE PREPARATION TOOLS**
HOCHDRUCKROHRVERSCHRAUBUNGEN UND WERKZEUGE FÜR DIE ERSTELLUNG VON ENDFLÄCHEN
RACCORDS POUR TUBES À HAUTE PRESSION ET OUTILS DE PRÉPARATION DE LA FACE TERMINALE

(30) Priority: 30.04.2010 US 329601 P
(43) Date of publication of application: 06.03.2013
(73) Proprietor: Parker-Hannifin Corporation, Cleveland, Ohio 44124-4141 (US)
(72) Inventor: Gibson, James David, Huntsville, Alabama 35803 (US)
(74) Representative: Belcher, Simon James
(86) International application number: PCT/US2011/034841
(87) International publication number: WO 2011/137452

(56) References cited:
- DE-A1- 19 512 464
- GB-A- 2 278 170
- US-A- 4 805 944
- US-A1- 2002 101 079

## Description

The present invention relates generally to sealing assemblies and associated components and methods used with compression fittings for coupling the end of a length of tubing to another member, and more particularly to such a sealing assembly for use with any coupling means known to those skilled in the art that it is capable of sustaining the high axial loads required for high-pressure applications and which is particularly adapted for use with hardened or other tubing used in "high-pressure" applications (e.g., an inverted ferrule arrangement, a locking back ferrule arrangement, a threaded collar (cone and thread) coupler, or the like).

As the pressure required in a system increases, the choices of appropriate tube fittings declines. For "high-pressure" situations-typically around 103 to 138 MPa (15 to 20 kpsi) and above-the only types of tube fittings usually available are cone and thread fittings and welded joints. However, these types of fittings are often sensitive to vibration and impact loads. Further, cone and thread fittings may often be physically large. Finally, cone and thread fittings often require coning and other preparation in the field, during installation. Hand-coning in the field is often difficult and labour intensive. Machine-coning typically involves an electrical or other power source that is not always available at an installation location. Because of at least the increased cost of installation and maintenance, and their large size, it is desirable to find alternatives to these high-pressure tube fittings.

Compression fittings of a ferruled-type are widely employed as medium- and low-pressure fittings in a variety of instrumentation, pneumatic, hydraulic, process, power, refrigeration, and other fluid transport applications utilizing plastic or metal tubing. Typically employing one or two ferrules for gripping the tubing and forming a fluid-tight seal between the tubing and the fitting body, these fittings have been adapted for use as connectors with many different tubing types including plastics such as polyurethane (PU), polytetrafluoro-ethylene (PTFE), fluorinate ethylene polypropylene (FEP), perfluoroalkoxy resin (PFA), polyethylene (PE), polypropylene (PP), rigid and flexible nylon, acrylonitrile-butadiene-styrene (ABS) copolymer, and metals such as copper, brass, steel, stainless steel, titanium, aluminum, and alloys such as nickel-copper and those sold under the trade marks Hastelloy, Alloy 600, 6Mo, Inconel and Incoloy, and the like. Examples of such prior-art fittings may be found, for example, in US-6851729.

In basic construction, such fittings for use with metal tubing often are formed from the same metal as the tubing (or in the case of copper tubing from brass) as including a body and one or more branches, ends, or other openings for connection to a tubing end. Often, these fittings are termed as being standard or inverted depending on the style of nut which is used in the fitting. Under such convention, "standard" nuts are internally-threaded for engagement with an externally-threaded body, with "inverted" nuts being externally-threaded for engagement with an internally-threaded body. However, these known fittings have not, historically, been suitable for high-pressure applications (above 138 MPa (20,000 psi)).

GB-A-2278170 discloses a threaded pipe connection which includes a sleeve having an annular end face. A pipe has an axial end face which faces the annular end face of the sleeve in the assembled connection. The connection includes an annular sealing ring which is located between the axial end face of the pipe and the annular end face of the seal, to form a seal between the sleeve and the pipe.

The present invention is directed to a type of coupling with sealing capability suitable for high-pressure applications. More particularly, the invention is directed at a tube-end preparation and/or sealing arrangement for use with known ferruled or other type couplers. The tube end, such as a cut tube end, may be relatively inexpensively and easily prepared, for example in the field, to provide a smooth sealing surface for an end face seal with a sealing radius less than the radius of the outer diameter surface of the tube, this being in contrast to prior art designs where the sealing radius is equal or greater than the radius of the outer diameter surface of the tube. The smaller sealing radius minimizes the force against the seal, thus allowing for effective sealing in higher pressure applications.

The invention provides a tube fitting assembly for high pressure applications, as defined in claim 1.

Optionally, the seal further includes a seal cage for aligning the seal with respect to the dimple on the tube end face and/or as a stop for defining a minimum spacing between the tube axial end face and the seating face when abutted therebetween.

Optionally, the tube fitting further includes a holding device for holding the tube in the fitting body with the seal axially compressed between the tube axial end face and the seating face.

Optionally, the holding device includes a nut for threadably engaging the fitting body.

Optionally, the holding device includes a front ferrule configured to clamp the tube.

Optionally, the nut is threadably engageable with the fitting body and compresses the front ferrule between the nut and the fitting body.

Optionally, the distance between the tube axial end face and the front ferrule is precisely controlled to provide appropriate force on the seal.

Optionally, the sealing member is a metal seal.

Optionally, the sealing member is a plastic or soft metal seal.

Optionally, the sealing member is an elastomeric seal.

Optionally, the metal seal has an arc-shaped cross-section.

Optionally, the arc-shaped cross-section is arranged to oppose fluid pressure from inside the fitting.

Optionally, the plastic or soft metal seal has a T-shaped cross-section.

Optionally, the fitting body has a fluid passageway.

Optionally, the fluid passageway opens into a counterbore

Optionally, the counterbore is sized to receive the tube.

Optionally, the seating face is formed on the bottom of the counterbore.

Optionally, the tube fitting includes a back ferrule.

Optionally, the back ferrule is compressed between the nut and the front ferrule.

Optionally, the holding device comprises a cone and thread fitting.

Optionally, the holding device comprises an inverted ferrule arrangement.

Optionally, the holding device comprises a locking back ferrule arrangement.

The invention also provides a method of sealing a tube to a tube fitting body for high pressure applications, as defined in claim 6.

Optionally, the method includes clamping a front ferrule onto the tube by tightening a nut threadably engaged with the fitting body to compress the front ferrule between the nut and the fitting body.

Optionally, the method includes aligning the seal with respect to the sealing surface on the axial end face with a seal cage.

Optionally, the method includes defining a minimum spacing between the axial end face and the seating face with a seal cage.

Optionally, the method includes compressing an annular seal between the seating surface on the fitting body and the sealing surface formed on the axial end face of the tube by tightening the nut.

The invention also provides a tube end preparation tool for use in forming a dimpled surface in an axial end face of a tube to be assembled in sealed relationship to a tube fitting body, as defined in claim 10.

Optionally, the actuator is hydraulically powered.

Optionally, the actuator further comprises a body having frustoconical sidewalls for setting a front ferrule on the tube.

Optionally, the distance between the axial end face of the tube and a contact point on the front ferrule is precisely controlled.

Optionally, the die is removable.

The invention can be implemented using an annular seal for high pressure sealing between an axial end face of a tube and a seating face of a fitting body, including an annular sealing member for sealing between the axial end face of the tube and the seating face of the fitting body; and an annular cage for holding the sealing member.

Optionally, the cage is configured to align the seal with respect to the axial end face of the tube and/or is sized to define a minimum spacing between the tube axial end face and the seating face when abutted therebetween.

Optionally, the annular seal includes a seal cage having a protrusion to support the sealing member.

Optionally, the sealing member is an elastomeric seal.

Optionally, the sealing member is a plastic or soft metal seal.

Optionally, the sealing member is a metal seal.

Optionally, the metal seal has an arc-shaped cross-section.

Optionally, the arc-shaped cross-section is arranged to oppose fluid pressure radially inward of the seal.

Optionally, the sealing member has a T-shaped cross-section.

Optionally, the metal seal is plated with a soft metal.

Optionally, the metal seal is coated with a plastic.

Optionally, the sealing member is resilient.

The invention can be implemented using a tube fitting assembly for high pressure applications, including a fitting body having an annular seating face and a fluid passageway opening into a counterbore; a tube having a tube axial end face juxtaposed to the seating face of the fitting body; and an annular seal including an annular sealing member interposed between and engaging the seating face and the tube axial end face for sealing the tube to the fitting body, in which the counterbore is sized to receive the tube and the seating face is formed on the bottom of the counterbore.

Optionally, the sealing member is a plastic or soft metal seal.

Optionally, the sealing member is T-shaped.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope.

Features that are described and/or illustrated with respect to one embodiment may be used in the same way or in a similar way in one or more other embodiments and/or in combination with or instead of the features of the other embodiments.

The term "comprises/comprising" when used in this specification is taken to specify the presence of stated features, integers, steps or components but does not preclude the presence or addition of one or more other features, integers, steps, components or groups thereof.

In the annexed drawings:
Fig. 1 is a cross-sectional view of a tube sealing assembly without a forged annular dimple formed in the end face of the tube, and therefore not according to the invention, which by way of example includes an inverted nut and tube fitting;
Fig. 2 is a cross-sectional view of a portion of a tube end preparation tool for forming an annular dimple in the end face of a tube held to the preparation tool;
Fig. 3 is a detailed cross-sectional view of the tube end preparation tool with a different preset insert;
Fig. 4 is a detailed cross-sectional view of the tube end preparation tool with another preset insert;
Fig. 5 is a detailed cross-sectional view of the tube end preparation tool with still another preset insert;
Fig. 6 is a cross-sectional view of another tube sealing assembly according to the invention, employing a metal arc-shape seal and seal cage;
Fig. 7 is a cross-sectional view of another tube sealing assembly according to the invention, employing a metal arc-shape seal, an elastomeric seal and a seal cage;
Fig. 8 is a cross-sectional view of a further tube sealing assembly according to the invention, employing an arc-shape seal and secondary plastic seal;
Fig. 9 is a cross-sectional view of yet another tube sealing assembly according to the invention, employing an elastomeric seal and seal cage;
Fig. 10 is a cross-sectional view of a tube sealing assembly similar to Fig. 9 but without the use of a dimple, thus not according to the invention;
Fig. 11 is a cross-sectional view of another tube sealing assembly not according to the invention, employing a plastic or soft metal seal; and
Fig. 12 is a cross-sectional view of yet another tube sealing assembly not according to the invention, similar to Fig. 11 but also employing a seal cage.

For illustrative purposes, a tube fitting assembly in accordance with the present invention is described in connection with a "straight" configuration such as for a union or coupling. It will be appreciated, however, that the invention will find application in other fitting configurations, such as tees, elbows, and crosses, and as port connections for valves, cylinders, manifolds, sensors, and other fluid components. Further, the word "tube" and "tubing" is used throughout, but there may be cases where pipe or piping may also be appropriate for use and thus the reference to "tube" or "tubing" is intended to encompass pipe or piping unless otherwise indicated. Still further, the use of the term "tube fitting" or the like in this specification not only refers to the inverted tube fitting used for illustrative purposes, but also encompasses non-inverted ("standard") tube fittings as well, though some of the advantages disclosed herein may not always be as evident with standard fittings that are often used in low-pressure applications. Use within these other such configurations and components therefore should be considered to be expressly within the scope of the present invention.

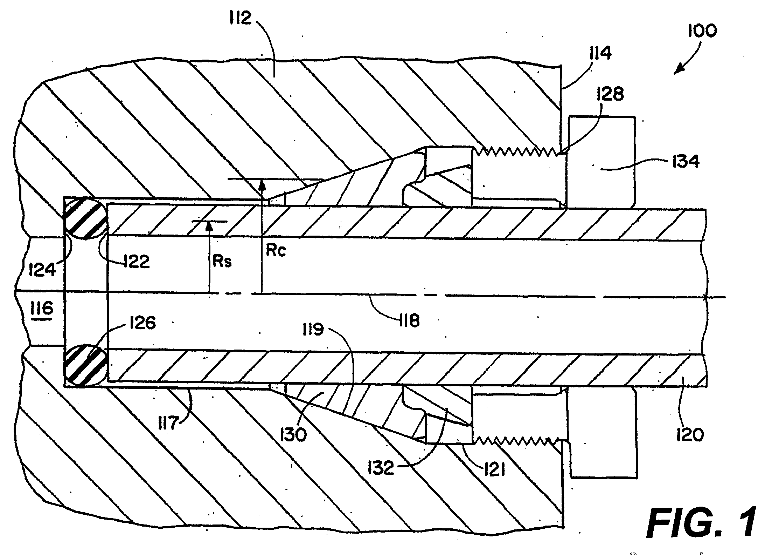

Referring first to Fig. 1, an exemplary tube fitting (also referred to herein as a tube fitting assembly) 100 in accordance with the present invention includes a body 112 having an external surface 114 and an internal bore 116 which extends coaxially with a central longitudinal axis 118. Depending upon the configuration of the fitting 100, the body's external surface 114 may be configured as having hexagonal or other flats portions for engagement with a wrench or other tool during make-up or disassembly. Of course, and as is known, by providing body 112 as having ends or branches which are angled, or as having multiple ends or branches, configurations other than straight, such as elbows, tees, or crosses may be provided. Alternatively, the body 112 may itself be a manifold, valve, piston, or other component or structure.

The bore 116 may be counterbored beginning from the body opening 128 and may extend therefrom along the longitudinal axis 118 into the body 112 in a stepwise fashion of generally decreasing diametric extent to the adjoining annular seating face 124. For example, the bore 116 may open into a counterbore 117, which may in turn open into a conical cam surface 119. The conical cam surface 119 may open into a second counterbore 121 which may end at the opening 128. The second counterbore 121 may include internal threading for engaging with a threaded holding mechanism. The bore 116, may be sized to accept the tubing 120, preferably with a close fit.

The tube axial end face 122 is sealed to the seating face 124 with a seal 126. The seating face 124 may be formed on the bottom of the counterbore 117. The seal 126 may be made of a variety of materials and be formed in a variety of shapes as described in more detail below. The sealed area and the load on the seal 126 (both dependent on the square of the sealed radius) is considerably reduced in comparison to traditional compression ferrule fittings. In high-pressure applications, the difference between Rs (the radius of the seal in this embodiment) and Rc (the radius of the seal in traditional compression ferrule fittings) is especially pronounced due to thicker-walled tubes. At least because of this decreased loading, this new ferrule-type fitting 100 is suitable for high-pressure applications. Further, the force tending to push tube 120 out of the fitting 100 may also be reduced by the reduced sealing radius.

The tubing 120 may be held to the fitting body 112 by a holding device that holds the tube in the fitting body with the seal 126 axially compressed between the tube axial end face 122 and the seating face 124. In the illustrated exemplary embodiment, the holding device includes a generally annular (generally frustroconically shaped) front ferrule 130 and, preferably, also a generally annular (generally frustroconically shaped) back ferrule 132 (each of which may be preset onto the outer diameter of the tube in a manner known in the art) and further through a generally annular, "inverted" nut 134. Although a particular ferrule arrangement has been shown for illustrative purposes, any suitable holding device including those employed high-pressure applications. For example, an inverted ferrule arrangement, a locking back ferrule arrangement, a threaded collar (cone and thread) coupler, or the like may be used.

The body 112 and the ferrules may be formed of the same or generally the same material as the tubing itself, e.g. brass for copper, with such material typically being selected for strength, corrosion or temperature resistance, or other physical or mechanical property as required, or otherwise for chemical compatibility with the service environment or with the fluid being handled. Such fluid most often will be a liquid such as water, hydraulic oil, or a process stream, or air or another gas.

Unlike traditional compression couplings which seal along the ferrules (or the cone in cone and thread couplings), embodiments of the present invention seal along the axial end face 122 of the tube 120. Therefore, the outside finish and the hardness of the tube 120 may not be as critical as it is in prior art couplings. Further, the present invention may utilize collar/ferrule designs (including threaded) that grip a wider variety of tube diameters and materials. Finally, the tube end preparation may be much simpler than that required with a tapered conical tube end for a cone and thread fitting.

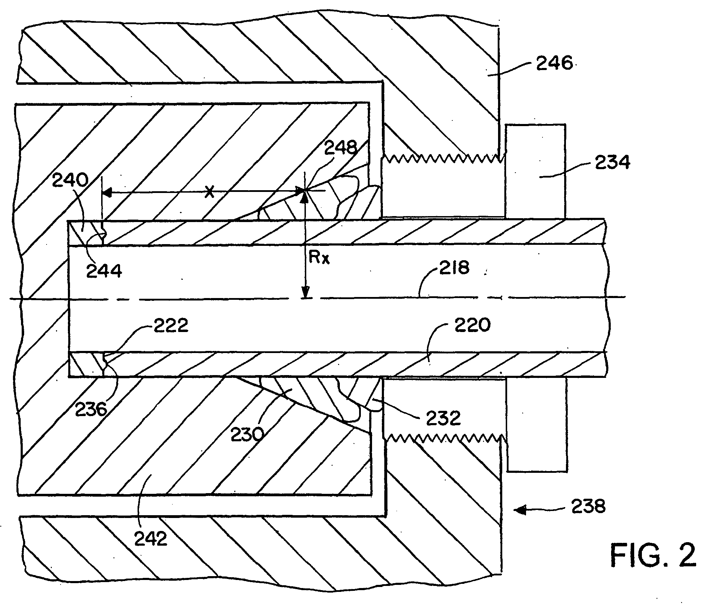

A preferred way of tube end preparation is now described with reference to Fig. 2. The tube 220 may have a tube end face 222 that is rough and filled with imperfections due to either low manufacturing tolerances or to cutting the tube 220 to length in the field. The imperfections on the tube end face 222 could cause a poor seal to form, or could abrade and thus degrade a seal 126 over time. A dimple 236 may be machined or may be punched, worked, forged, or otherwise mechanically permanently deformed in the tube end face 222 to smooth the surface over dimple area of the tube end face 222, thus allowing for a better seal and less abrasion of the seal 126. The dimple 236 forms a generally concave smooth surface with fewer and less severe surface imperfections than would otherwise exist on the end face 222 of raw cut tube 220.

In order to form the dimple 236, any suitable means may be employed to die-form, preferably by cold forging, the dimple into the axial end face of the tube. In Fig. 2, an exemplary end preparation tool 238 is shown. The end preparation tool 238 may be a manual or hydraulic end preparation tool 238. The tool may also have functions in addition to forming the dimple 236 as described below. The tool may have a dedicated die for forming the dimple, or may use removable die inserts for forming the dimple.

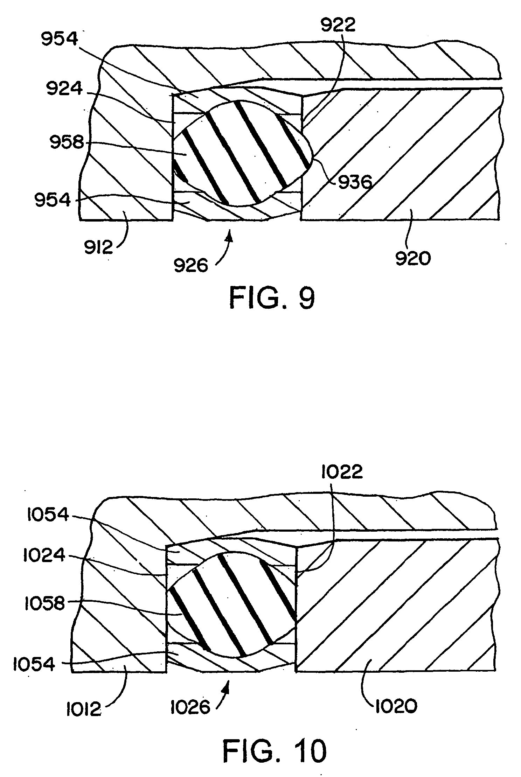

The tube 220 may inserted into the tool 238 to abut a generally annular, hardened preset insert 240 (or other die) that may rest against the inside of a preset body 242 which may act as an actuator to push the preset insert 240 into the tube end face 222. The preset insert 240 may be removable from the preset body 242. Alternatively, the preset insert 240 may be formed integral with the preset body 242. The preset insert 240 may include one or more preset protrusions 244 that form one or more annular dimples 236 on the tube end face 222. The preset insert 240 may be used, for example, to prepare the tube 220 for use with the seal 926 shown in Fig.9 and discussed below.

The end preparation tool 238 may also be used to clamp the front and back ferrules 230, 232 onto the tube 220, as in well known manner.

A manual or hydraulic ram (not shown) may push the preset body 242, and thus the preset insert 240, into the tube end face 222. To resist this pushing force, the nut 234 may be threadably engaged with an end preparation tool head 246, which is fixed in relation to the preset body and may act as a tube holder. The nut 234 may provide a backstop for the front and back ferrules 230, 232 to allow the tube 220 to resist the motion of the preset insert 240. In addition, the preset body 242 may push against the front ferrule 230 directly, thus setting or clamping the ferrules 230, 232 to the tube 220.

The distance X between the tube end face 222 and the point of contact 248 between the front ferrule 230 and the preset body 242 may be tightly controlled during this process. Alternatively or additionally, the radius Rx from the longitudinal centerline 218 to the point of contact 248 may be tightly controlled during this process. The point of contact 248 may be a point, a ring, or a frustoconical surface along the front ferrule 230, and may correspond to a point of contact between this front ferrule 230 and the fitting body 112 (or, more specifically, the conical cam surface 119) when the fitting 100 is assembled. This tight control may allow for a proper fit during the fitting 100 assembly which may ensure a proper seal load, preventing damage to the seal 126.

Alternatively, the presetting process described above may use the fitting body 112 instead of a separate end preparation tool 238. For example, the preset insert 240 may be placed in the fitting body 112 in place of the seal 126. The nut 234 may be used to tighten down the fitting 100 pressing the tube end face 222 into the preset insert 240 to form the dimple 236. The nut 234 may be tightened to a predetermined torque setting to provide the appropriate amount of axial force to form the dimple 244. The fitting 100 may then be disassembled to replace the preset insert 240 with the seal 126.

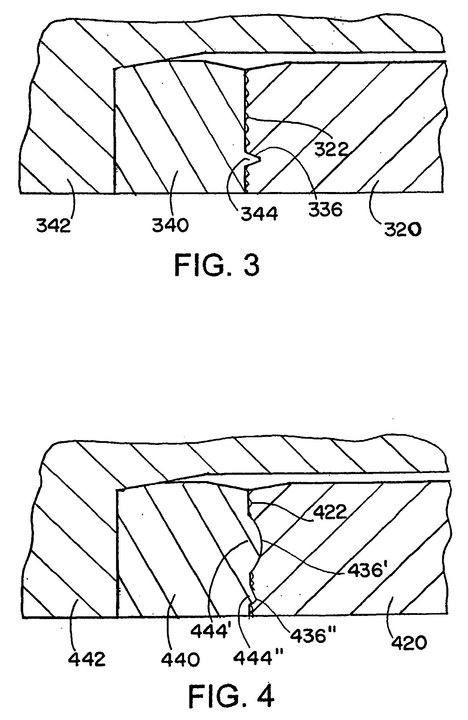

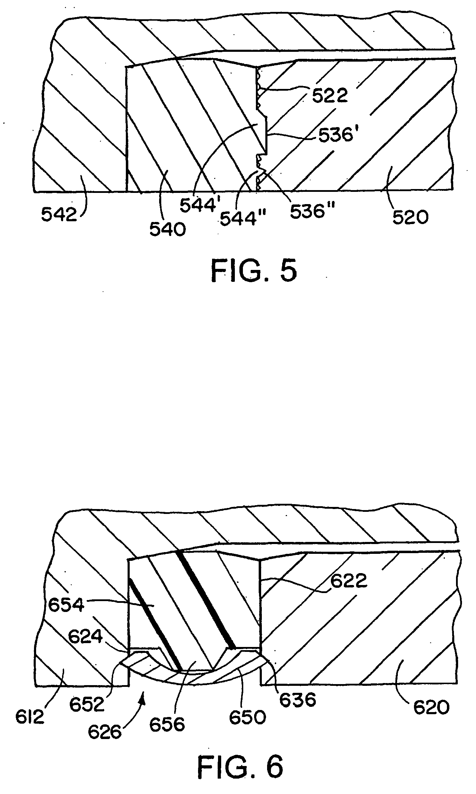

Figs. 3 to 5 show three more exemplary tube end preparation tools. In Fig.3, the tube 320 may be inserted into the preset body 342 in order to improve the tube end face 322 for sealing. The preset body 342 may push the preset insert 340 into the tube end face 322. The preset protrusion 344 may remove imperfections in the tube end face 322 by forming the dimple 336. This preset insert 340 may be used, for example, to prepare the tube 320 for use with the seal 626 shown in Fig.6 and discussed below.

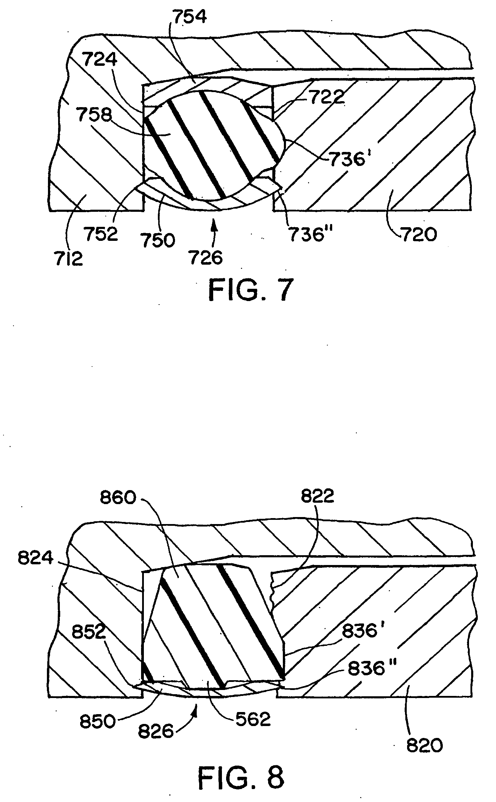

In Fig.4, the tube 420 may be inserted into the preset body 442 in order to improve the tube end face 422 for sealing. The preset body 442 may push the preset insert 440 into the tube end face 422. The preset protrusions 444', 444" may remove imperfections in the tube end face 422 by forming the dimples 436', 436". This preset insert 440 may be used, for example, to prepare the tube 420 for use with the seal 726 shown in Fig.7 and discussed below.

In Fig.5, the tube 520 may be inserted into the preset body 542 in order to improve the tube end face 522 for sealing. The preset body 542 may push the preset insert 540 into the tube end face 522. The preset protrusions 544', 544" may remove imperfections in the tube end face 522 by forming the dimples 536', 536". This preset insert 540 may be used, for example, to prepare the tube 520 for use with the seal 826 shown in Fig.8 and discussed below.

Fig.6 is a detail drawing illustrating the area around a seal 626. The tube 620 is inserted into fitting body 612. The tube end face 622 and bore seating face 624 are sealed with a metal seal 650. The metal seal 650 may fit into the dimple 636 in the tube end face 622. The metal seal 650 may also fit into a groove 652 in the bore seating face 624 either caused by the metal seal 650 digging into the seating face 624, or by a machining operation during the manufacture of the fitting body 612. Alternatively, because the seating face 624 may be machined with high precision and therefore contain fewer and less serious imperfections than the tube end face 622, no groove 652 may exist or be needed. The seal 626 may also include a seal cage 654.

In this and the other embodiments employing a metal seal, the metal seal may be formed of any suitable material preferably having sufficient resiliency to accommodate the axial deflection imparted to the seal so as to maintain a metal-to-metal seal under a biasing force.

The seal cage 654 in some embodiments may act as a stop to prevent overloading of the metal seal 650.

Additionally or alternatively, the seal cage 654 in some embodiments may help align the metal seal 650 with any dimples 636 or notches 652 present.

Finally, the seal cage 654 in some embodiments may act to prevent the metal seal 650 from buckling by providing extra support with a cage projection 656.

Fig.7 is a detail drawing illustrating the area around a seal 726. The tube 720 is inserted into fitting body 712. The tube end face 722 and bore seating face 724 are sealed with the metal seal 750 (metal-to-metal) and with the elastomeric seal 758. The metal seal 750 may fit into the dimple 736" and the elastomeric seal 758 may fit into the dimple 736' in the tube end face 722. The metal seal 750 may also fit into a groove 752 in the bore seating face 724. Alternatively, because the seating face 724 may be machined with high precision and therefore contain fewer and less serious imperfections than the tube end face 722, no groove 752 may exist or be needed. The seal 726 may also include a seal cage 754. The seal cage 754 may act as a stop to prevent overloading of the metal seal 750 or the elastomeric seal 758. Further, the seal cage 754 may help align the metal seal 750 and the elastomeric seal 758 with any dimples 736', 736" or notches 752 present.

Fig. 8 is a detail drawing illustrating the area around a seal 826. The tube 820 is inserted into fitting body 812. The tube end face 822 and bore seating face 824 are sealed with the metal seal 850 and with the plastic (or soft metal) seal 860. The metal seal 850 may fit into the dimple 836" and the plastic seal 860 may fit into the dimple 836' in the tube end face 822. The metal seal 850 may also fit into a groove 852 in the bore seating face 824. Alternatively, because the seating face 824 may be machined with high precision and therefore contain fewer and less serious imperfections than the tube end face 822, no groove 852 may exist or be needed. The plastic seal 860 may help align the metal seal 850 with any dimples 836" or notches 852 present. Further, the plastic seal 860 may act to prevent the metal seal 850 from buckling by providing extra support with a projection 862.

Fig. 9 is a detail drawing illustrating the area around a seal 926. The tube 920 is inserted into fitting body 912. The tube end face 922 and bore seating face 924 are sealed with the elastomeric seal 958. The elastomeric seal 958 may fit into the dimple 936 in the tube end face 922. The seal 926 may also include a seal cage 954. The seal cage 954 may act as a stop to prevent overloading of the elastomeric seal 958. Further, the seal cage 954 may help align the elastomeric seal 958 with any dimples 936 present. Although not shown, the seal cage may also include spurs or other protrusions that may mate with complimentary dimples formed in the tube end face 922 in order to further improve the seal.

Fig. 10 is another embodiment of a seal 1026 in a fitting assembly, not according to the present invention. The seal 1026 is similar to that shown in Fig.9, and all common elements are labeled with a numeral incremented by 100. Seal 1026, unlike the seal 926 in Fig.9, seal 1026 may seal directly to the tube end face 1022 without any dimples formed therein. Again, although not shown, the seal cage may also include spurs or other protrusions that may mate with complimentary dimples formed in the tube end face 1022 in order to further improve the seal.

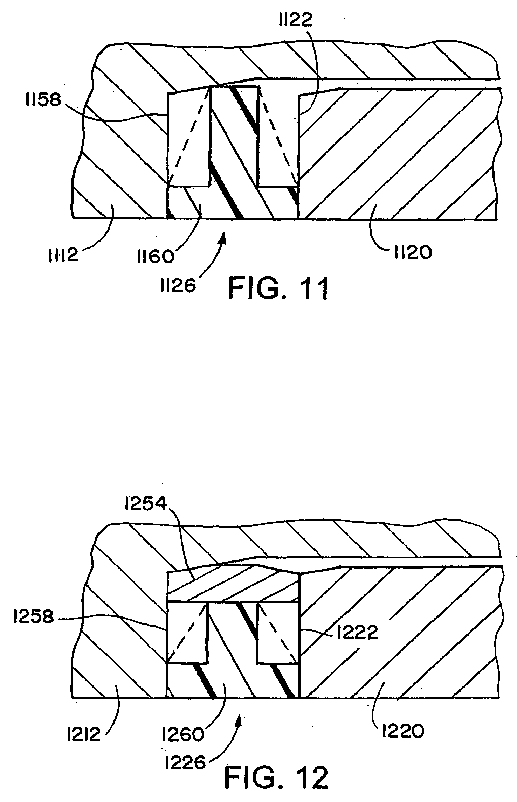

Fig. 11 is a detail drawing illustrating the area around a seal 1126 in a fitting assembly, not according to the present invention. The tube 1120 is inserted into fitting body 1112. The tube end face 1122 and bore seating face 1124 are sealed with the plastic (or soft metal) seal 1160 without any dimples in the tube end face 1122. The plastic seal 1160 may be T-shaped, or may have another shape such as indicated by the shadow lines in the figure. Further, although not shown, the plastic seal 1160 may also include spurs or other protrusions that may mate with complimentary dimples formed in the tube end face 1122 in order to further improve the seal.

Fig. 12 is a detail drawing illustrating the area around a seal 1226 in a fitting assembly, not according to the present invention. The tube 1220 is inserted into fitting body 1212. The tube end face 1222 and bore seating face 1224 are sealed with the plastic (or soft metal) seal 1260 without any dimples in the tube end face 1222. The plastic seal 1260 may be T-shaped, or may have another shape such as indicated by the shadow lines in the figure. Further, a seal cage 1254 may be included to help position the plastic seal 1260, or to provide a stop to prevent overloading the plastic seal 1260. Further, although not shown, the plastic seal 1260 and/or the seal cage 1254 may also include spurs or other protrusions that may mate with complimentary dimples formed in the tube end face 1122 in order to further improve the seal.

The seals described herein may take many forms and be made of many materials. For example, metal seals are annular and preferably have an arc-shaped (bowed) cross section with the arc disposed radially inwardly to counter pressure from the inside of the tube fitting. That is, a convex side of the seal faces radially inwardly and the seal may have a radially outer concave side facing radially outwardly. With fluid pushing on the convex side of the seal, the strength of the seal actually increases. In order to prevent buckling, the arc-shape may be reinforced by either another seal or a cage having a protrusion, or otherwise shaped to support the metal seal. Further, seals may be formed for ease of manufacturing, or to fit shaped tube ends or seating faces. The T-shaped seals shown in Figs. 11 and 12 may be especially advantageous in some cases because they may form a seal very close to the inside diameter of the tube and/or bore. Although elastomeric, metal, and plastic seals have been used for illustrative purposes, other resilient or soft materials may also be used.

Plastic seals may be made from, for example, PEEK, Nylon, or the like. Metal seals may be made from, for example, copper, zinc, or the like. Further, metal seals can be plated with a soft metal (e.g., silver, zinc, copper, or the like) or coated with a plastic (e.g., PTFE or the like) in order to improve sealing. Flexible metal seals may be preferred in some cases in order to maintain a seal during small tube movements caused by thermocycling, vibration, line loads, or the like. Plastics and soft metals may be especially preferable in some cases because they may deform easily to seal to fitting body and tube end face imperfections. Further, plastics and soft metals are generally sufficiently rigid to maintain their position and not be pulled into the system flow.

Seal cages may be formed from a variety of materials, but are preferably rigid metals in order to prevent damage to seals caused by overloading. In many cases, the functions of a cage may be replicated by substituting a plastic seal.

One or more secondary seal members may be incorporated into a seal in order to provide a backup seal.

## Claims

1. A tube fitting assembly for high pressure applications, comprising:
(a) a fitting body (612) having an annular seating face (624),
(b) a tube (6 20) having a tube axial end face (622) juxtaposed to the seating face of the fitting body, and
(c) an annular seal (626) including an annular sealing member interposed between and engaging the seating face and the tube axial end face for sealing the tube to the fitting body,
**characterised in that** the tube axial end face (6 22) has formed therein a forged annular dimple (636) forming a sealing surface against which the annular sealing member seals.

2. The tube fitting of claim 1, in which the seal (626) includes a seal cage (654) for aligning the seal with respect to the dimple (636) on the tube axial end face (622) and/or as a stop for defining a minimum spacing between the tube axial end face (622) and the seating face (624) when abutted therebetween.

3. The tube fitting of claim 1 or claim 2, which includes a holding device for holding the tube (620) in the fitting body (6 12) with the seal (626) axially compressed between the tube axial end face (622) and the seating face ( 624), in which the holding device optionally includes at least one of (a) a nut (134) for threadably engaging the fitting body and (b) a front ferrule (130) configured to clamp the tube, and in which, when the holding device includes a nut and a front ferrule, the nut is threadably engageable with the fitting body and compresses the front ferrule between the nut and the fitting body.

4. The tube fitting of any previous claim, in which the sealing member (626) is a metal seal.

5. The tube fitting of any one of claims 1 to 3, in which the sealing member (626) is a plastic or soft metal seal or an elastomeric seal.

6. A method of sealing a tube to a tube fitting body (612) for high pressure applications, comprising:
dimpling an axial end face (622) of a tube (6 20) to provide a sealing surface that is smoother than the axial end face prior to the dimpling,
assembling an annular seal (626) between a seating surface (624) on the fitting body (6 12) and the sealing surface formed on the axial end face of the tube.

7. The method of claim 6, which includes clamping a front ferrule (130) on to the tube (6 20) by tightening a nut (134) threadably engaged with the fitting body (6 12) to compress the front ferrule between the nut and the fitting body.

8. The method of claim 6 or claim 7, which includes aligning the seal (626) with respect to the sealing surface on the axial end face (6 22) with a seal cage (654).

9. The method of any one of claims 6 to 8, which includes defining a minimum spacing between the axial end face ( 6 22) and the seating face (624) with a seal cage (654).

10. A tube end preparation tool (238) for use in forming a dimpled surface in an axial end face of a tube to be assembled in sealed relationship to a tube fitting body, comprising:
a tube holder (234, 246) for holding a tube (220) therein,
a die (240) having an annular dimple forming protrusion (244), and
an actuator (242) for forcibly urging the die into an axial end face (222) of the tube held in the tube holder with the annular dimple forming protrusion forming an annular dimple in the axial end face of the tube so as to provide a sealing surface smoother than the axial end face prior to dimpling.

11. The tube end preparation tool of claim 10, in which the actuator (242) is hydraulically powered.

12. The tube end preparation tool of claim 10 or claim 11, in which the actuator comprises a body (242) having frustoconical sidewalls for setting a front ferrule (230) on the tube (220).

13. The tube end preparation tool of claim 12, in which the distance (X) between the axial end face (222) of the tube (220) and a contact point (248) on the front ferrule (230) is precisely controlled.

14. The tube end preparation tool of any one of claims 10 to 13, in which the die (240) is removable.

## Patentansprüche

1. Eine Rohranschlussanordnung für Hochdruckanwendung, aufweisend:
a) einen Anschlusskörper (612) mit einer ringförmigen Sitzfläche (624);
b) ein Rohr (620) mit einer axialen Rohrstirnfläche (622), die an der Sitzfläche des Anschlusskörpers angrenzt; und
c) eine Ringdichtung (626), die ein ringförmiges Dichtelement umfasst, das zwischen die Sitzfläche und die axiale Rohrstirnfläche eingefügt ist und an diesen angreift, um das Rohr gegen den Anschlusskörper abzudichten;
**dadurch gekennzeichnet, dass** die axiale Rohrstirnfläche (622) in sich eine eingeprägte, ringförmige Vertiefung (636) ausbildet, die eine Dichtfläche formt, gegen welche das ringförmige Dichtelement dichtet.

2. Der Rohranschluss nach Anspruch 1, bei welchem die Dichtung (626) einen Dichtkäfig (654) umfasst, um die Dichtung bezüglich der Vertiefung (636) an der axialen Rohrstirnfläche (622) auszurichten und/oder als einen Anschlag zum Definieren eines minimalen Abstands zwischen der axialen Rohrstirnfläche (622) und der Sitzfläche (624), wenn er zwischen diesen anliegt.

3. Der Rohranschluss nach Anspruch 1 oder Anspruch 2, welcher eine Halteeinrichtung zum Halten des Rohrs (620) in dem Anschlusskörper (612) mit der Dichtung (626) axial komprimiert zwischen der axialen Rohrstirnfläche (622) und der Sitzfläche (624) umfasst, wobei die Halteeinrichtung optional zumindest eins der folgenden umfasst:
(a) eine Mutter (634) zum gewindemäßigen Eingriff des Anschlusskörpers und (b) einen Vorderklemmring (130), der dazu eingerichtet ist, das Rohr zu klemmen, und wobei, wenn die Halteeinrichtung eine Mutter und eine Vorderklemmring umfasst, die Nuss gewindemäßig an dem Anschlusskörper eingreifen kann und den Vorderklemmring zwischen der Mutter und dem Anschlusskörper komprimiert.

4. Der Rohranschluss nach einem der vorhergehenden Ansprüche, wobei das Dichtelement (626) eine Metalldichtung ist.

5. Der Rohranschluss nach einem der Ansprüche 1 bis 3, bei welchem das Dichtelement (626) eine Kunststoff- oder Weichmetalldichtung oder eine elastomere Dichtung ist.

6. Ein Verfahren zum Dichten eines Rohrs an einen Rohranschlusskörper (612) für Hochdruckanwendungen, das umfasst:
Einprägen einer axialen Stirnfläche (622) eines Rohrs (620), um eine Dichtfläche bereitzustellen, die glatter ist als die axiale Stirnfläche vor dem Einprägen,
Montieren einer Ringdichtung (626) zwischen einer Sitzfläche (624) an dem Anschlusskörper (612) und der Dichtfläche, die an der axialen Stirnfläche des Rohres ausgebildet ist.

7. Das Verfahren nach Anspruch 6, welches das Klemmen eines Vorderklemmrings (130) an dem Rohr (620) durch Anziehen einer Mutter (134) umfasst, die gewindemäßig an dem Anschlusskörper (612) angreift, um den Vorderklemmring zwischen der Mutter und dem Anschlusskörper zu komprimieren.

8. Das Verfahren nach Anspruch 6 oder Anspruch 7, welches ein Ausrichten der Dichtung (626) bezüglich der Dichtfläche an der axialen Stirnfläche (622) mit einem Dichtungskäfig (654) umfasst.

9. Das Verfahren nach einem der Ansprüche 6 bis 8, welches das Definieren eines minimalen Abstands zwischen der axialen Stirnfläche (622) und der Sitzfläche (624) mit einem Dichtungskäfig (654) umfasst.

10. Ein Rohrende-Vorbereitungswerkzeug (638) zum Verwenden beim Formen einer eingeprägten Oberfläche in der axialen Stirnfläche eines Rohres, das in dichtender Beziehung an einem Rohranschlusskörper montiert wird, aufweisend:
einen Rohrhalter (234, 246) zum Halten eines Rohres (220),
eine Pressform (240) mit einer ringförmige Vertiefung bildenden Erhebung (244), und
einem Aktuator (242) zum gewaltsamen Drängen der Pressform in eine axiale Stirnfläche (222) des Rohres, das in dem Rohrhalter gehalten wird, wobei die ringförmige Vertiefung bildende Erhöhung eine ringförmige Vertiefung in der axialen Stirnfläche des Rohres bildet, um eine dichtende Oberfläche bereitzustellen, die glatter ist als die axiale Stirnfläche vor dem Einprägen.

11. Das Rohrende-Vorbereitungswerkzeug nach Anspruch 10, bei welchem der Aktuator (242) hydraulisch angetrieben ist.

12. Das Rohrende-Vorbereitungswerkzeug nach Anspruch 10 oder Anspruch 11, bei welchem der Aktuator einen Körper (242) mit frustokonischen Seitenwänden zum Setzen eines Vorderklemmrings (230) auf das Rohr (220) hat.

13. Das Rohrende-Vorbereitungswerkzeug nach Anspruch 12, bei welchem der Abstand (X) zwischen der axialen Stirnfläche (222) des Rohres (220) und ein Kontaktpunkt (248) an dem Vorderklemmring (230) präzise kontrolliert wird.

14. Das Rohrende-Vorbereitungswerkzeug nach einem der Ansprüche 10 bis 13, bei welchem die Pressform (240) entfernbar ist.

## Revendications

1. Ensemble de raccord de tube pour des applications à haute pression, comprenant :
(a) un corps de raccord (612) ayant une face d'appui annulaire (624),
(b) un tube (620) ayant une face d'extrémité axiale de tube (622) juxtaposée à la face d'appui du corps de raccord, et
(c) un joint d'étanchéité annulaire (626) comportant un élément d'étanchéité annulaire interposé entre la face d'appui et la face d'extrémité axiale de tube et s'engageant avec celles-ci pour assurer l'étanchéité du tube par rapport au corps de raccord,
**caractérisé en ce qu'**une fossette annulaire forgée (636) est formée dans la face d'extrémité axiale de tube (622), laquelle fossette forme une surface d'étanchéité contre laquelle l'élément d'étanchéité annulaire assure l'étanchéité.

2. Raccord de tube de la revendication 1, dans lequel le joint d'étanchéité (626) comporte une cage de joint (654) pour aligner le joint d'étanchéité par rapport à la fossette (636) sur la face d'extrémité axiale de tube (622) et/ou en tant que butée pour définir un espacement minimal entre la face d'extrémité axiale de tube (622) et la face d'appui (624) quand en butée entre celles-ci.

3. Raccord de tube de la revendication 1 ou 2, qui comporte un dispositif de maintien permettant de maintenir le tube (620) dans le corps de raccord (612) avec le joint d'étanchéité (626) comprimé axialement entre la face d'extrémité axiale de tube (622) et la face d'appui (624), où le dispositif de maintien comporte éventuellement au moins l'un(e) parmi (a) un écrou (134) pour s'engager par vissage avec le corps de raccord et (b) une virole avant (130) configurée pour fixer le tube, et où, lorsque le dispositif de maintien comporte un écrou et une virole avant, l'écrou peut s'engager par vissage avec le corps de raccord et comprime la virole avant entre l'écrou et le corps de raccord.

4. Raccord de tube de l'une des revendications précédentes, dans lequel l'élément d'étanchéité (626) est un joint d'étanchéité métallique.

5. Raccord de tube de l'une quelconque des revendications 1 à 3, dans lequel l'élément d'étanchéité (626) est un joint d'étanchéité plastique ou en métal mou ou un joint d'étanchéité élastomère.

6. Procédé pour assurer l'étanchéité d'un tube par rapport à un corps de raccord de tube (612) pour des applications à haute pression, comprenant le fait :
de former une fossette sur une face d'extrémité axiale (622) d'un tube (620) pour fournir une surface d'étanchéité qui est plus lisse que la face d'extrémité axiale avant la formation de fossette,
d'assembler un joint d'étanchéité annulaire (626) entre une surface d'appui (624) sur le corps de raccord (612) et la surface d'étanchéité formée sur la face d'extrémité axiale du tube.

7. Procédé de la revendication 6, qui comporte le serrage d'une virole avant (130) sur le tube (620) en serrant un écrou (134) s'engageant par vissage avec le corps de raccord (612) pour comprimer la virole avant entre l'écrou et le corps de raccord.

8. Procédé de la revendication 6 ou 7, qui comporte le fait d'aligner le joint d'étanchéité (626) par rapport à la surface d'étanchéité sur la face d'extrémité axiale (622) avec une cage de joint (654).

9. Procédé de l'une quelconque des revendications 6 à 8, qui comporte le fait de définir un espacement minimal entre la face d'extrémité axiale (622) et la face d'appui (624) avec une cage de joint (654).

10. Outil de préparation d'extrémité de tube (238) pour une utilisation dans la formation d'une surface à fossette dans une face d'extrémité axiale d'un tube devant être assemblé de manière étanche à un corps de raccord de tube, comprenant :
un support de tube (234, 246) pour maintenir un tube (220) dans celui-ci,
une matrice (240) ayant une saillie de formation de fossette annulaire (244), et
un actionneur (242) pour pousser de manière forcée la matrice dans une face d'extrémité axiale (222) du tube maintenu dans le support de tube avec la saillie de formation de fossette annulaire formant une fossette annulaire dans la face d'extrémité axiale du tube de manière à fournir une surface d'étanchéité plus lisse que la face d'extrémité axiale avant la formation de fossette.

11. Outil de préparation d'extrémité de tube de la revendication 10, dans lequel l'actionneur (242) est un actionneur à commande hydraulique.

12. Outil de préparation d'extrémité de tube de la revendication 10 ou 11, dans lequel l'actionneur comprend un corps (242) ayant des parois latérales tronconiques pour placer une virole avant (230) sur le tube (220).

13. Outil de préparation d'extrémité de tube de la revendication 12, dans lequel la distance (X) entre la face d'extrémité axiale (222) du tube (220) et un point de contact (248) sur la virole avant (230) est commandée avec précision.

14. Outil de préparation d'extrémité de tube de l'une quelconque des revendications 10 à 13, dans lequel la matrice (240) est amovible.
